# EUROPÄISCHE PATENTSCHRIFT

(11) **EP 3 561 969 B1**
(45) Veröffentlichungstag und Bekanntmachung des Hinweises auf die Patenterteilung: **28.09.2022**
(21) Anmeldenummer: 19168400.0
(22) Anmeldetag: 10.04.2019
(51) Int. Cl.: H01R 39/58

(54) **VERSCHLEISSMESSSYSTEM UND VERFAHREN**
WEAR MEASURING SYSTEM AND METHOD
SYSTÈME DE MESURE D'USURE ET PROCÉDÉ

(30) Priorität: 26.04.2018 DE 102018110098
(43) Veröffentlichungstag der Anmeldung: 30.10.2019
(73) Patentinhaber: Schunk Transit Systems GmbH, 35435 Wettenberg (DE)
(72) Erfinder: NOLTE, Julian, 35638 Leun (DE); CASTELLANOS, Robert, 35396 Gießen (DE)
(74) Vertreter: advotec.

(56) Entgegenhaltungen:
- EP-A2- 0 360 197
- DE-A1- 4 003 669
- DE-A1- 10 320 236
- DE-U1- 9 212 881

## Beschreibung

Die Erfindung betrifft ein Verschleißmesssystem für Reibelemente, insbesondere Bürsten oder dergleichen, sowie ein Verfahren zur Verschleißmessung von Reibelementen, umfassend zumindest ein konsumierbares Reibelement, eine Haltevorrichtung zur bewegbaren Positionierung des Reibelements relativ zu einer Reibfläche, und eine Messvorrichtung zur Bestimmung eines Verschleißzustandes des Reibelements bezogen auf eine Verschleißlänge des Reibelements, wobei die Messvorrichtung ein Potentiometer aufweist, wobei das Potentiometer derart mit dem Reibelement mechanisch gekoppelt ist, dass eine Bewegung des Reibelements relativ zu der Reibfläche eine Bewegung des Potentiometers bewirkt, wobei die Messvorrichtung eine an der Haltevorrichtung gelagerte Welle mit einem Hebelarm aufweist, wobei die Welle an das Potentiometer und der Hebelarm an das Reibelement gekoppelt ist, wobei der Hebelarm durch eine Bewegung des Reibelements in Richtung der Reibfläche verschwenkbar und die Welle drehbar ist.

Reibelemente, wie beispielsweise Kohlebürsten für Elektromotoren und Generatoren, Reibbeläge zur Kraftübertragung, Bremsbeläge und Festschmierstoffstücke, sind grundsätzlich immer einem Verschleiß durch Abrieb von Material des Reibelements unterworfen. Häufig ist es wünschenswert, das Reibelement bereits vor einem Erreichen einer eine Funktion beeinträchtigende Verschleißgrenze auszutauschen. So werden Verschleißmesssysteme regelmäßig dazu eingesetzt, einen Verschleißzustand von Reibelementen zu überwachen. Bekannt sind hier elektrische Kontakte an Reibelementen, oder auch Schalter, die ein Erreichen einer Verschleißgrenze signalisieren können.

Die DE 10 2007 009 423 A1 offenbart ein derartiges Verschleißmesssystem. Da Schalter lediglich ein Erreichen einer Verschleißgrenze signalisieren können, ist eine tatsächliche Messung eines Verschleißzustandes bzw. einer Verschleißlänge des Reibelements nicht möglich.

Weiter ist es bekannt, Reibelemente mit einer Transpondereinheit zu versehen, die mit einer Sende-Empfangseinheit drahtlos kommunizieren kann, wodurch eine aufwendige Verkabelung der Reibelemente entfällt.

Ein bekanntes Verschleißmesssystem nutzt Druckluft zur Messung einer Verschleißlänge eines Reibelements, wobei ein an einer Halteeinrichtung angeordnetes Reibelement bei einem fortschreitenden Verschleiß Öffnungen freigibt, aus denen Druckluft entweichen kann. Über einen Strömungssensor wird eine Strömungsintensität, und damit eine Länge des Reibelements bzw. eine Verschleißlänge gemessen. Nachteilig ist hier, dass stets eine Druckluftquelle benötigt wird.

Gerade bei einem Einsatz von Reibelementen an Windkraftgeneratoren, beispielsweise in Form einer Bürste, Kohlebürste oder Metallbürste an einem Schleifring oder Kommutator des Generators, kann keine Druckluftquelle zu vertretbaren Kosten bereitgestellt werden. Auch eine Verwendung von Schaltern, Messwertaufnehmern oder Sensoren unmittelbar an dem Reibelement ist problematisch, da je nach Lastfall oder auch bedingt durch einen Ausfall benachbarter Reibelemente sehr hohe Ströme über das Reibelement fließen können, welche einen Schaltvorgang auslösen, unterbrechen oder Messwerte verfälschen können. Auch muss das betreffende Verschleißmesssystem besonders robust und verlässlich sein, da es an einem Windkraftgenerator Temperaturen von - 40°C bis +150°C und Verschmutzungen durch Ablagerung von Bürstenstaub ausgesetzt sein kann. Weiter ist ein Bauraum an einem Windkraftgenerator besonders eng bemessen. Gleichwohl ist es wünschenswert stets aktuelle und genaue Informationen über eine noch verbleibende Verschleißlänge der an einem Windkraftgenerator eingesetzten Reibelemente zu erhalten, da dann eine Wartung eines Windkraftgenerators mit einem Austausch der Reibelemente einfacher planbar wird.

Die EP 0 360 197 A2 zeigt ein Verschleißmesssystem für Bürsten nach dem Oberbegriff des Anspruchs 1, wobei eine Haltevorrichtung zur bewegbaren Positionierung von Bürsten an einem Kommutator oder Schleifring vorgesehen ist. Dabei ist eine Reihe von Bürsten in einer axialen Richtung in der Haltevorrichtung an einem Kommutator oder Schleifring gehaltert, wobei an einer rückwärtigen Stirnseite jede der Bürsten ein mit einer Federkraft beaufschlagter Hebel oder eine Rollbahnfeder zur Erzeugung einer Andruckkraft anliegt. Die Hebel sind jeweils mit einer Welle gekoppelt, um die sie drehbar sind. An einem Ende der Welle ist ein Drehpotentiometer an die Welle angeschlossen, über das eine Länge einer abgenutzten Bürste entsprechend eines Drehwinkels des Potentiometers gemessen werden kann. Der Hebel weist eine separate Achse auf und je nach Ausführungsform des Verschleißmesssystems kann der Hebel über eine Zahnradverbindung mit der Welle mit dem Drehpotentiometer bzw. der Hebel oder die Rollbahnfeder über einen Seilzug mit der Welle und dem Drehpotentiometer verbunden sein.

Die DE 40 03 669 A1 beschreibt ein Verschleißmesssystem bzw. eine Haltevorrichtung für Bürsten. Insbesondere ist auch hier ein Hebel vorgesehen, der direkt mit einer Welle verbunden ist, wobei mittels des Hebels eine Andruckkraft auf eine Bürste in der Haltevorrichtung an einer rückwärtigen Stirnseite der Bürste aufgebracht werden kann. Auch ist hier mit der Welle ein Drehpotentiometer verbunden.

Aus der DE 92 12 881 U1 ist ein Bürstenhalter für elektrische Maschinen mit zumindest einer jeweils mindestens eine (Kohle-) Bürste aufnehmenden Bürstenführung, die an einem Bürstenlineal befestigt ist.

Die DE 40 03 669 A1 eine Vorrichtung zum Erfassen der Länge der Bürsten einer elektrischen Maschine, bei der die Bürsten jeweils durch ein Andrückglied in Anlage am Kommutator der Maschine gehalten sind.

Der vorliegenden Erfindung liegt daher die Aufgabe zugrunde, ein Verschleißmesssystem und ein Verfahren zur Verschleißmessung von Reibelementen vorzuschlagen, welches eine kostengünstige und verlässliche Verschleißmessung von Reibelementen ermöglicht.

Diese Aufgabe wird durch ein Verschleißmesssystem mit den Merkmalen des Anspruchs 1, einen Windkraftgenerator mit den Merkmalen des Anspruchs 12 und ein Verfahren mit den Merkmalen des Anspruchs 13 gelöst.

Das erfindungsgemäße Verschleißmesssystem für Reibelemente, insbesondere Bürsten oder dergleichen, umfasst zumindest ein konsumierbares Reibelement, eine Haltevorrichtung zur bewegbaren Positionierung des Reibelements relativ zu einer Reibfläche, und eine Messvorrichtung zur Bestimmung eines Verschleißzustandes des Reibelements bezogen auf eine Verschleißlänge des Reibelements, wobei die Messvorrichtung ein Potentiometer aufweist, wobei das Potentiometer derart mit den Reibelementen mechanisch gekoppelt ist, dass eine Bewegung des Reibelements relativ zu der Reibfläche eine Bewegung des Potentiometers bewirkt, wobei die Messvorrichtung eine an der Haltevorrichtung gelagerte Welle mit einem Hebelarm aufweist, wobei die Welle an das Potentiometer und der Hebelarm an das Reibelement gekoppelt ist, wobei der Hebelarm durch eine Bewegung des Reibelements in Richtung der Reibfläche verschwenkbar und die Welle drehbar ist, wobei an dem Reibelement ein Fortsatz ausgebildet oder angeordnet ist, an dem der Hebelarm angreift.

Dadurch dass das Reibelement bei einer mechanischen Koppelung mit dem Potentiometer verbunden ist, wird es möglich, eine Bewegung des Reibelements auf das Potentiometer zu übertragen. Das Potentiometer kann beispielsweise als ein Spannungsteiler betrieben werden, wodurch es möglich wird, eine in Abhängigkeit der Bewegung und der dann damit verbundenen Längenänderung des Reibelements die tatsächlich verbleibende Verschleißlänge des Reibelements zu messen. Durch die mechanische Kopplung ist es dann auch möglich, das Potentiometer so weit von dem Reibelement entfernt zu positionieren, dass unabhängig von dem durch das Reibelement fließenden Strom eine Messung durchgeführt werden kann bzw. keine Beeinflussung des Potentiometers durch diesen Strom erfolgen kann. Darüber hinaus können Potentiometer innerhalb größerer Temperaturbereiche, bei besonders niedrigen aber auch bei besonders hohen Temperaturen verlässlich eingesetzt werden. Bei dem Potentiometer kann es sich um ein Drahtpotentiometer, Wendelpotentiometer, Schichtpotentiometer, Trimmpotentiometer, Mehrfachpotentiometer oder ein elektronisches Potentiometer handeln. Potentiometer sind besonders kostengünstig und einfach erhältlich, weshalb die Messvorrichtung mit geringen Kosten ausgebildet werden kann.

Erfindungsgemäß weist die Messvorrichtung eine an der Haltevorrichtung gelagerte Welle mit einem Hebelarm auf, wobei die Welle an das Potentiometer und der Hebelarm an das Reibelement gekoppelt ist, wobei der Hebelarm durch eine Bewegung des Reibelements in Richtung der Reibfläche verschwenkbar und die Welle drehbar ist. Der Hebelarm kann relativ zu einer Längsachse der Welle orthogonal an dieser angeordnet sein, so dass die Bewegung des Hebelarms unmittelbar in eine Drehung der Welle umgewandelt werden kann. Die Drehung der Welle kann dann ihrerseits direkt oder indirekt durch eine mechanische Kopplung in eine Bewegung des Potentiometers bzw. dessen Betätigung umgesetzt werden.

Die Welle und der Hebelarm können zusammen mehrteilig oder auch einstückig ausgebildet sein. Die Welle kann auch in einer einfachen Bohrung in der Haltevorrichtung gelagert sein, wobei sich der Hebelarm dann vorzugsweise in Richtung des Reibelements erstreckt. Die mechanische Kopplung des Hebelarms mit dem Reibelement kann dann derart erfolgen, dass eine Bewegung des Reibelements infolge einer Längenänderung mittelbar oder unmittelbar auf den Hebelarm übertragen wird.

Erfindungsgemäß ist an dem Reibelement ein Fortsatz ausgebildet oder angeordnet, an dem der Hebelarm angreift. Der Hebelarm kann so direkt mit dem Reibelement in Verbindung gebracht bzw. kontaktiert werden.

Die Verschleißlänge des Reibelements kann von der Messvorrichtung kontinuierlich messbar sein. Die Verschleißlänge kann folglich in Echtzeit zu jedem Betriebszeitpunkt verhältnismäßig genau bestimmt werden. Beispielsweise kann die Verschleißlänge in einem Bereich von 0 bis 100 % eines möglichen Verschleißes des Reibelements gemessen werden. Ein Verschleißzustand, beispielsweise in Form einer Prozentangabe, kann in Abhängigkeit einer Längenangabe ermittelt werden. Dadurch wird es möglich, zu jedem Zeitpunkt eines Betriebs eines Reibelements Kenntnis über einen Verschleißzustand des Reibelements zu erhalten und damit einen Austausch des Reibelements vorausschauend zu planen. Im Gegensatz zu einem Schaltimpuls liefert das Verschleißmesssystem dann einen das Reibelement betreffenden Betriebsparameter.

Das Potentiometer kann vorteilhaft ein Drehpotentiometer sein. Bei Schiebepotentiometern besteht grundsätzlich die Schwierigkeit, diese gegenüber eindringender Verschmutzung wirkungsvoll abzudichten. Drehpotentiometer können aufgrund einer drehbaren Welle betätigt werden, die leicht mit einer Dichtung gegenüber Verschmutzungen, wie beispielsweise Bürstenstaub, abgedichtet werden kann. Ein Drehpotentiometer ist daher vergleichsweise robust und kann in einem Temperaturbereich von -40°C bis + 150°C eingesetzt werden. Weiter sind Drehpotentiometer auch in Größen erhältlich, die eine Baugröße der Haltevorrichtung nicht wesentlich beeinflussen. Drehpotentiometer können daher auch bei einem besonders kleinen zur Verfügung stehenden Bauraum, beispielsweise an einem Windkraftgenerator, vorteilhaft eingesetzt werden.

Der Fortsatz kann von einem Blech ausgebildet sein und an einem Ende des Hebelarms anliegen. Das Blech kann seinerseits an dem Reibelement mit einfachen Mitteln befestigt sein und beispielsweise an dem Reibelement quer zu einer Längsachse des Reibelements von diesem abstehen, so dass eine Bewegung entlang der Längsachse des Reibelements infolge einer Längenänderung eine Bewegung des Fortsatzes bewirkt. Der Fortsatz kann dann mit dem Ende des Hebelarms fest verbunden sein oder einfach nur an dem Ende anliegen. Vorzugsweise liegt der Fortsatz bezogen auf eine auf die Reibfläche gerichtete Bewegungsrichtung des Reibelements an dem Ende auf. Dadurch kann das Reibelement auch aus der Haltevorrichtung einfach entnommen werden, ohne dass der Hebelarm entfernt werden müsste.

Der Hebelarm kann mittels einer von einer Feder der Messvorrichtung bewirkten Federkraft an dem Fortsatz positioniert sein. Dadurch kann dann sichergestellt werden, dass der Hebelarm stets an dem Fortsatz lose anliegt. Die Federkraft bzw. die von dem Hebelarm auf den Fortsatz bewirkte Kraft muss dabei immer vergleichsweise kleiner sein, als eine Federkraft einer Feder der Haltevorrichtung, die das Reibelement gegen die Reibfläche drückt. Eine Feder der Haltevorrichtung kann beispielsweise eine Rollbandfeder oder eine Spiralfeder sein. So kann verhindert werden, dass das Reibelement von der Feder der Messvorrichtung aus der Haltevorrichtung herausbewegt wird. Gleichzeitig kann jedoch sichergestellt werden, dass der Hebelarm stets mit dem Fortsatz in Kontakt steht, so dass eine aktuelle Position des Reibelements messbar ist.

An der Haltevorrichtung kann eine Mehrzahl von Reibelementen, bevorzugt zwei Reibelemente, besonders bevorzugt vier Reibelemente, angeordnet sein, wobei alle Reibelemente mit der Messvorrichtung mechanisch gekoppelt sein können. So ist es dann auch möglich, mit einer einzigen Messvorrichtung eine Anzahl von Reibelementen gleichzeitig zu überwachen. Dabei ist es zunächst unerheblich, ob für jedes Reibelement jeweils eine Welle, ein Hebelarm und ein Potentiometer vorgesehen ist. Prinzipiell ist es jedoch auch möglich, je nach Anordnung der Reibelemente, an der Haltevorrichtung, beispielsweise bei einer Reihenanordnung, sämtliche Reibelemente mit einer entlang der Reihenanordnung angeordneten Welle mit einem einzigen Potentiometer zu überwachen. Die jeweiligen Hebelarme können so an die zugehörigen Reibelemente gekoppelt sein, dass das jeweils kleinste bzw. kürzeste Reibelement eine Betätigung des Hebelarms bewirkt. Damit kann sichergestellt werden, dass die Überwachung bzw. Messung der Verschleißlänge nach dem zuerst verschleißenden Reibelement erfolgt. Beispielsweise kann der Hebelarm auch so beschaffen sein, dass sämtliche Reibelemente einen einzigen Hebelarm betätigen können oder für jedes Reibelement eigens ein Hebelarm vorgesehen ist.

Die Haltevorrichtung kann die Reibelement an einem Umfang der ringförmigen Reibfläche in einer gemeinsamen Querschnittsebene positionieren, wobei an der Haltevorrichtung dann zumindest zwei Wellen gelagert sein können. Die Reibelemente können folglich in Umfangsrichtung der Reibfläche, welche durch einen Schleifring oder einen Kommutator ausgebildet sein kann, aufeinanderfolgend angeordnet sein, wobei dann für jedes Reibelement eine Welle mit einem Hebelarm vorgesehen sein kann. Die Reibelemente können mittels der Haltevorrichtung auch in Reihen von mehreren Reibelementen paarweise angeordnet sein.

Die Wellen können über ein Getriebe der Messvorrichtung miteinander verbunden sein, wobei eine der Wellen an das Drehpotentiometer gekoppelt sein kann. So kann durch Anordnung der Wellen mit den jeweiligen Hebelarmen eine Messvorrichtung mit besonders geringer Baugröße mit nur einem Potentiometer ausgebildet werden. Das Getriebe kann eine Übersetzung von 1 : 1 aufweisen, so dass eine Bewegung einer Welle unmittelbar auf eine Bewegung der anderen Welle übertragen werden kann. So ist es dann auch ausreichend, das Drehpotentiometer nur an einer der Wellen anzuschließen.

Insbesondere kann das Getriebe von jeweils einem auf der Welle angeordneten Zahnrad ausgebildet sein, wobei die Zahnräder dann miteinander in Eingriff stehen. Die Zahnräder können eine Stirnradverzahnung aufweisen.

Die Messvorrichtung kann eine Verarbeitungsvorrichtung aufweisen, mittels der die Verschleißlänge bestimmbar ist. Die Verarbeitungsvorrichtung kann aus einfachen elektronischen Bauteilen ausgebildet sein und/oder eine Einrichtung zur Datenverarbeitung umfassen. Weiter kann auch vorgesehen sein, mittels der Verarbeitungsvorrichtung das Reibelement aus der Ferne zu überwachen. Dazu kann die Verarbeitungsvorrichtung über eine Verbindungsleitung, drahtlose Verbindungstechniken oder über das Internet mit einem Endgerät zur Anzeige einer Messinformation verbunden sein. So wird es dann auch möglich, an besonders schwer zugänglichen Stellen, wie beispielsweise in einer Gondel einer Windkraftanlage, Reibelemente in Echtzeit zu überwachen.

Mittels der Verarbeitungsvorrichtung kann eine Teilspannung am Potentiometer bestimmt werden, wobei aus der Teilspannung eine Winkelposition des Hebelarms bestimmt werden kann, wobei aus der Winkelposition eine Länge des Reibelements bestimmt werden kann. Beispielsweise kann mittels eines Analog-Digital-Wandlers die gemessene analoge Spannung in eine digitale Spannung gewandelt werden. Da die Eigenschaften des Potentiometers prinzipiell bekannt sind, kann aus der digitalen Spannung eine Drehwinkelposition des Potentiometers bestimmt werden, die mit der Winkelposition des Hebelarms korrespondiert. Aufgrund der Geometrie der Haltevorrichtung und des Reibelements ist es dann möglich, aus der Winkelposition des Hebelarms eine Länge des Reibelements zu bestimmen. Zur Kompensation eines Einflusses einer Umgebungstemperatur kann die Messvorrichtung einen Temperatursensor umfassen, der im Bereich des Halters bzw. Potentiometers angeordnet ist. Auch kann vorgesehen sein, eine Teilspannung am Potentiometer für ein neues Reibelement und ein verschlissenes Reibelement zu ermitteln und diese Teilspannungen jeweils zu speichern, um die Verschleißlänge besonders genau berechnen zu können.

Der erfindungsgemäße Windkraftgenerator umfasst ein erfindungsgemäßes Verschleißmesssystem. Weitere Ausführungsformen eines Windkraftgenerators ergeben sich aus den Merkmalsbeschreibungen der auf den Anspruch 1 rückbezogenen Unteransprüche.

Bei dem erfindungsgemäßen Verfahren zur Verschleißmessung von Reibelementen, insbesondere Bürsten oder dergleichen, wird mittels einer Haltevorrichtung zumindest ein konsumierbares Reibelement relativ zu einer Reibfläche bewegbar positioniert, wobei mittels einer Messvorrichtung ein Verschleißzustand des Reibelements bezogen auf eine Verschleißlänge des Reibelements bestimmt wird, wobei eine Bewegung des Reibelements relativ zu der Reibfläche eine Bewegung eines mit dem Reibelement mechanisch gekoppelten Potentiometers der Messvorrichtung bewirkt, wobei die Messvorrichtung eine an der Haltevorrichtung gelagerte Welle mit einem Hebelarm aufweist, wobei die Welle an das Potentiometer und der Hebelarm an das Reibelement gekoppelt ist, wobei der Hebelarm durch eine Bewegung des Reibelements in Richtung der Reibfläche verschwenkt und die Welle gedreht wird, wobei an dem Reibelement ein Fortsatz ausgebildet oder angeordnet ist, an dem der Hebelarm angreift. Zu den besonderen Vorteilen des Verfahrens zur Verschleißmessung wird auf die nähere Beschreibung des erfindungsgemäßen Verschleißmesssystems verwiesen. Weitere vorteilhafte Ausführungsformen des Verfahrens ergeben sich aus den Merkmalsbeschreibungen der auf den Anspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: eine Vorderansicht eines Verschleißmesssystems;
- **Fig. 2**: eine Rückansicht des Verschleißmesssystems;
- **Fig. 3**: eine Draufsicht des Verschleißmesssystems.

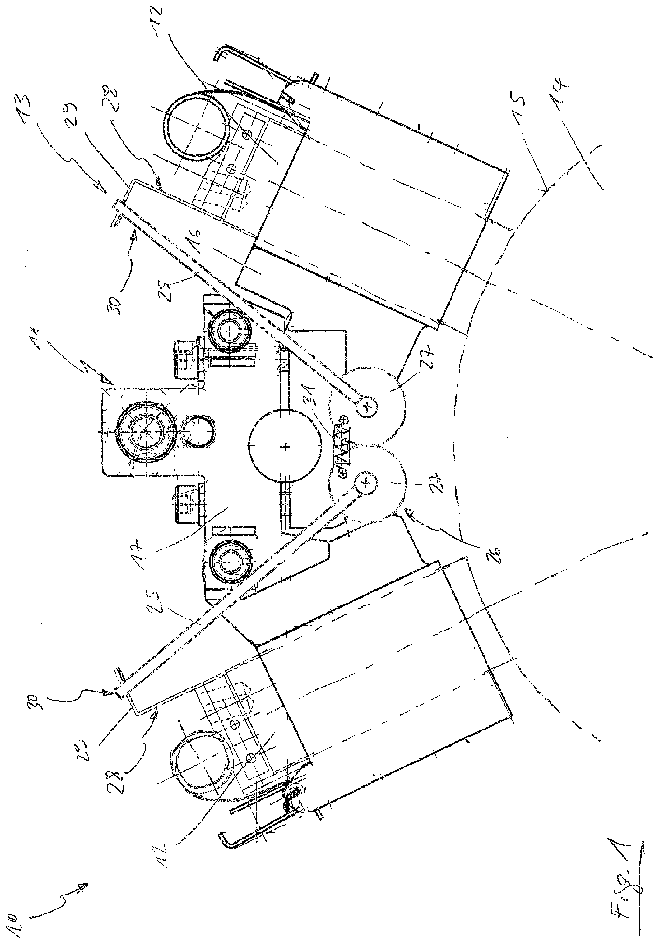

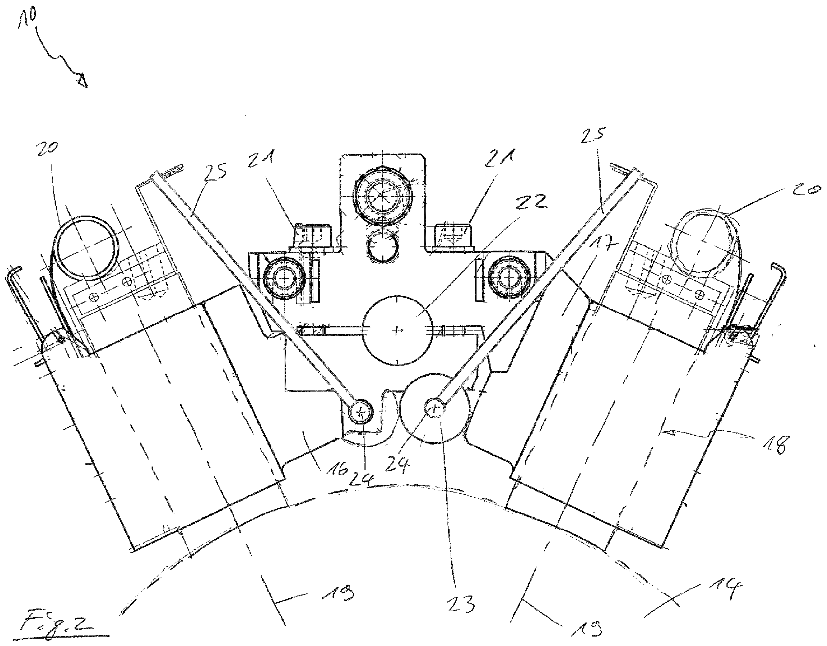

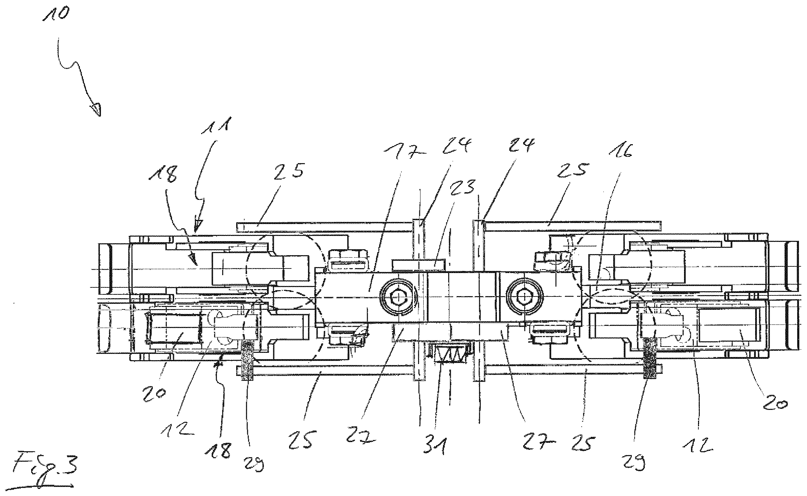

Eine Zusammenschau der **Fig. 1** bis **3** zeigt ein Verschleißmesssystem 10, umfassend eine Haltevorrichtung 11 für vier Reibelemente 12 bzw. Bürsten sowie eine Messvorrichtung 13 zur Bestimmung eines Verschleißzustandes eines Reibelements 12 bezogen auf eine Verschleißlänge des Reibelements 12. Das Verschleißmesssystem 10 ist an einer Welle 14 eines hier nicht näher dargestellten Windkraftgenerators angeordnet und die Reibelemente 12 kontaktieren eine Reibfläche 15 der Welle 14 zur Übertragung elektrischer Energie über die Reibelemente 12. Die Haltevorrichtung 11 umfasst zwei Halteelemente 16 und 17, die jeweils Schäfte 18 zur Aufnahme der Reibelemente 12 aufweisen. Die Reibelemente 12 sind jeweils in einen Schaft 18 eingesetzt und entlang ihrer jeweiligen Längsachse 19 in Richtung auf die Reibfläche 15 bewegbar. Insbesondere werden die Reibelemente 12 mittels einer Rollbandfeder 20 mit einer Federkraft gegen die Reibfläche 15 gedrückt. Die Halteelemente 16 und 17 sind über Schrauben 21 miteinander verbunden und an einer Haltestange 22 geklemmt, so dass die Haltevorrichtung 11 an der Haltestange 22 positioniert und relativ zu der Reibfläche 15 ausgerichtet werden kann.

Die Messvorrichtung 13 weist ein Drehpotentiometer 23 auf, das mit den Reibelementen 12 mechanisch gekoppelt ist, derart, dass eine Bewegung des Reibelements 12 relativ zu der Reibfläche 15 eine Bewegung des Drehpotentiometers 23 bewirkt. Weiter umfasst die Messvorrichtung 13 zwei an der Haltevorrichtung 11 gelagerte Wellen 24, an denen jeweils ein Hebelarm 25 angeordnet ist. Eine der Wellen 24 ist an das Drehpotentiometer 23 gekoppelt bzw. mit diesem verbunden. Weiter sind die Wellen 24 über ein Getriebe 26 der Messvorrichtung 13 miteinander verbunden, wobei das Getriebe 26 aus zwei Zahnrädern 27, die hier nur schematisch dargestellt sind, ausgebildet ist. Die Zahnräder 27 stehen miteinander in Eingriff, so dass eine Bewegung eines der Hebelarme 25 bzw. ein Verschwenken desselben eine Drehung des Drehpotentiometers 23 bewirkt. An den jeweiligen Reibelementen 12 ist ein Fortsatz 28 von einem Blech 29 ausgebildet, welches an dem Reibelement 12 befestigt ist. Das Blech 29 liegt an einem Ende 30 des jeweiligen Hebelarms 25 an, derart, dass eine Bewegung des Reibelements 12 in Richtung der Reibfläche 15 durch Abnutzung des Reibelements 15 ein Andrücken des Blechs 29 auf das Ende 30 und damit ein Verschwenken des Hebelarms 25 bewirkt. Gleichzeitig ist das Blech 29 mit dem Hebelarm 25 nur lose verbunden, so dass das Reibelement 12 einfach aus dem Schaft 18 entnommen werden kann.

Mittels einer Feder 31 der Messvorrichtung 13, welche hier an den Zahnrädern 27 angeordnet ist, werden die Enden 30 der Hebelarme 25 gegen die jeweiligen Bleche 29 angedrückt, so dass das Kürzeste der Reibelemente 12 ausschlaggebend für eine Neigung sämtlicher Hebelarme und damit für eine Drehwinkelposition des Drehpotentiometers 23 ist. Das Drehpotentiometer 23 weist eine hier nicht dargestellte Hohlwelle auf, durch die Welle 24 hindurchgeführt ist. Insgesamt können hier vier Reibelemente 12, von denen zwei dargestellt sind, an der Haltevorrichtung 11 gehaltert werden.

## Patentansprüche

1. Verschleißmesssystem (10) für Reibelemente, insbesondere Bürsten oder dergleichen, umfassend zumindest ein konsumierbares Reibelement (12), eine Haltevorrichtung (11) zur bewegbaren Positionierung des Reibelement relativ zu einer Reibfläche (15), und eine Messvorrichtung (13) zur Bestimmung eines Verschleißzustandes des Reibelements bezogen auf eine Verschleißlänge des Reibelements, wobei die Messvorrichtung ein Potentiometer aufweist, wobei das Potentiometer derart mit dem Reibelement mechanisch gekoppelt ist, dass eine Bewegung des Reibelements relativ zu der Reibfläche eine Bewegung des Potentiometers bewirkt, wobei die Messvorrichtung eine an der Haltevorrichtung gelagerte Welle (24) mit einem Hebelarm (25) aufweist, wobei die Welle an das Potentiometer und der Hebelarm an das Reibelement gekoppelt ist, wobei der Hebelarm durch eine Bewegung des Reibelements in Richtung der Reibfläche verschwenkbar und die Welle drehbar ist,
**dadurch gekennzeichnet,**
**dass** an dem Reibelement ein Fortsatz (28) ausgebildet oder angeordnet ist, an dem der Hebelarm angreift.

2. Verschleißmesssystem nach Anspruch 1,
**dadurch gekennzeichnet,**
**dass** die Verschleißlänge des Reibelements (12) von der Messvorrichtung (13) kontinuierlich messbar ist.

3. Verschleißmesssystem nach Anspruch 1 oder 2,
**dadurch gekennzeichnet,**
**dass** das Potentiometer ein Drehpotentiometer (23) ist.

4. Verschleißmesssystem nach einem der vorangehenden Ansprüche ,
**dadurch gekennzeichnet,**
**dass** der Fortsatz (28) von einem Blech (29) ausgebildet ist und an einem Ende (30) des Hebelarms (25) anliegt.

5. Verschleißmesssystem nach einem der vorangehenden Ansprüche ,
**dadurch gekennzeichnet,**
**dass** der Hebelarm (25) mittels einer von einer Feder (31) der Messvorrichtung (13) bewirkten Federkraft an dem Fortsatz (28) positioniert ist.

6. Verschleißmesssystem nach einem der vorangehenden Ansprüche ,
**dadurch gekennzeichnet,**
**dass** an der Haltevorrichtung (11) eine Mehrzahl von Reibelementen (12), bevorzugt zwei Reibelemente, besonders bevorzugt vier Reibelemente, angeordnet sind, wobei alle Reibelemente mit der Messvorrichtung (13) mechanisch gekoppelt sind.

7. Verschleißmesssystem nach Anspruch 6,
**dadurch gekennzeichnet,**
**dass** die Haltevorrichtung (11) die Reibelemente (12) an einem Umfang der ringförmigen Reibfläche (15) in einer gemeinsamen Querschnittsebene positioniert, wobei an der Haltevorrichtung zumindest zwei Wellen (24) gelagert sind.

8. Verschleißmesssystem nach Anspruch 7 und Anspruch 3,
**dadurch gekennzeichnet,**
**dass** die Wellen (24) über ein Getriebe (26) der Messvorrichtung (13) miteinander verbunden sind, wobei eine der Wellen an das Drehpotentiometer (23) gekoppelt ist.

9. Verschleißmesssystem nach Anspruch 8,
**dadurch gekennzeichnet,**
**dass** das Getriebe (26) von jeweils einem auf der Welle (24) angeordneten Zahnrad (27) ausgebildet ist, wobei die Zahnräder miteinander in Eingriff stehen.

10. Verschleißmesssystem nach einem der vorangehenden Ansprüche ,
**dadurch gekennzeichnet,**
**dass** die Messvorrichtung (13) eine Verarbeitungsvorrichtung aufweist, mittels der die Verschleißlänge bestimmbar ist

11. Verschleißmesssystem nach Anspruch 10 und Anspruch 3,
**dadurch gekennzeichnet,**
**dass** mittels der Verarbeitungsvorrichtung eine Teilspannung am Drehpotentiometer (23) bestimmbar ist, wobei aus der Teilspannung eine Winkelposition des Hebelarms (25) bestimmbar ist, wobei aus der Winkelposition eine Länge des Reibelements (12) bestimmbar ist.

12. Windkraftgenerator umfassend ein Verschleißmesssystem (10) nach einem der vorangehenden Ansprüche.

13. Verfahren zur Verschleißmessung von Reibelementen, insbesondere Bürsten oder dergleichen, wobei mittels einer Haltevorrichtung (11) zumindest ein konsumierbares Reibelement (12) relativ zu einer Reibfläche (15), bewegbar positioniert wird, wobei mittels einer Messvorrichtung (13) ein Verschleißzustand des Reibelements bezogen auf eine Verschleißlänge des Reibelements bestimmt wird, wobei eine Bewegung des Reibelements relativ zu der Reibfläche eine Bewegung eines mit dem Reibelement mechanisch gekoppelten Potentiometers der Messvorrichtung bewirkt, wobei die Messvorrichtung eine an der Haltevorrichtung gelagerte Welle (24) mit einem Hebelarm (25) aufweist, wobei die Welle an das Potentiometer und der Hebelarm an das Reibelement gekoppelt ist, wobei der Hebelarm durch eine Bewegung des Reibelements in Richtung der Reibfläche verschwenkt und die Welle gedreht wird,
**dadurch gekennzeichnet,**
**dass** an dem Reibelement ein Fortsatz (28) ausgebildet oder angeordnet ist, an dem der Hebelarm angreift.

## Claims

1. A wear measuring system (10) for friction elements, in particular for brushes or the like, comprising at least one consumable friction element (12), a holding device (11) for movably positioning the friction element relative to a friction surface (15), and a measuring device (13) for determining a wear status of the friction element relative to a wear length of the friction element,
wherein the measuring device has a potentiometer, wherein the potentiometer is mechanically coupled with the friction element in such a way that a movement by the friction element relative to the friction surface induces a movement of the potentiometer, wherein the measuring device has a shaft (24) having a lever arm (25) and being mounted on the holding device, wherein the shaft is coupled to the potentiometer and the lever arm is coupled to the friction element, wherein the lever arm can be pivoted by moving the friction element in the direction of the friction surface and the shaft can be rotated,
**characterised in that**
an extension (28) is designed or arranged on the friction element, and acted upon by the lever arm.

2. The wear measuring system according to claim 1,
**characterised in that**
the wear length of the friction element (12) can be continuously measured by the measuring device (13).

3. The wear measuring system according to claim 1 or 2,
**characterised in that**
the potentiometer is a rotary potentiometer (23).

4. The wear measuring system according to one of the preceding claims,
**characterised in that**
the extension (28) consists of a metal sheet (29) and abuts against one end (30) of the lever arm (25).

5. The wear measuring system according to one of the preceding claims,
**characterised in that**
the lever arm (25) is positioned on the extension (28) by a spring force exerted by a spring (31) of the measuring device (13).

6. The wear measuring system according to one of the preceding claims,
**characterised in that**
a plurality of friction elements (12), preferably two friction elements, especially preferably four friction elements, are arranged on the holding device (11), wherein all friction elements are mechanically coupled with the measuring device (13).

7. The wear measuring system according to claim 6,
**characterised in that**
the holding device (11) positions the friction elements (12) on a periphery of the annular friction surface (15) in a shared cross sectional plane, wherein at least two shafts (24) are mounted on the holding device.

8. The wear measuring system according to claim 7 and claim 3,
**characterised in that**
the shafts (24) are connected with each other via a gearbox (26) of the measuring device (13), wherein one of the shafts is coupled to the rotary potentiometer (23).

9. The wear measuring system according to claim 8,
**characterised in that**
the gearbox (26) is comprised of a respective gearwheel (27) arranged on the shaft (24), wherein the gearwheels engage each other.

10. The wear measuring system according to one of the preceding claims,
**characterised in that**
the measuring device (13) has a processing device, by means of which the wear length can be determined.

11. The wear measuring system according to claim 10 and claim 3,
**characterised in that**
the processing device can be used to determine a partial voltage on the rotary potentiometer (23), wherein an angular position of the lever arm (25) can be determined from the partial voltage, wherein a length of the friction element (12) can be determined from the angular position.

12. A wind power generator comprising a wear measuring system (10) according to one of the preceding claims.

13. A method for measuring the wear of friction elements, in particular of brushes or the like, wherein a holding device (11) is used to movably position at least one consumable friction element (12) relative to a friction surface (15), wherein a measuring device (13) is used to determine a wear status of the friction element relative to a wear length of the friction element, wherein a movement by the friction element relative to the friction surface induces a movement by a potentiometer of the measuring device, said potentiometer being mechanically coupled with the friction element, wherein the measuring device has a shaft (24) having a lever arm (25) and being mounted on the holding device, wherein the shaft is coupled to the potentiometer and the lever arm is coupled to the friction element, wherein the lever arm is pivoted by moving the friction element in the direction of the friction surface and the shaft is rotated
**characterised in that**
an extension (28) is designed or arranged on the friction element, and acted upon by the lever arm.

## Revendications

1. Système de mesure d'usure (10) pour des éléments de frottement, notamment pour des brosses ou autres choses semblables, ledit système de mesure d'usure comprenant au moins un élément de frottement (12) consommable, un dispositif de maintien (11) pour positionner l'élément de frottement de manière mobile par rapport à une surface de frottement (15) et un dispositif de mesure (13) pour déterminer un état d'usure de l'élément de frottement par rapport à une longueur d'usure de l'élément de frottement,
le dispositif de mesure ayant un potentiomètre, ledit potentiomètre étant couplé mécaniquement avec l'élément de frottement de telle manière qu'un mouvement de l'élément de frottement par rapport à la surface de frottement provoque un mouvement du potentiomètre, ledit dispositif de mesure comportant un arbre (24) ayant un bras de levier (25) et étant monté sur le dispositif de maintien, ledit arbre étant couplé au potentiomètre et ledit bras de levier étant couplé à l'élément de frottement, ledit bras de levier pouvant être pivoté en mouvant l'élément de frottement dans la direction de la surface de frottement et ledit arbre pouvant être tourné,
**caractérisé en ce**
**qu'**un prolongement (28) est réalisé ou disposé sur l'élément de frottement, le bras de levier agissant sur ledit prolongement.

2. Système de mesure d'usure selon la revendication 1,
**caractérisé en ce que**
la longueur d'usure de l'élément de frottement (12) peut être mesurée continûment par le dispositif de mesure (13).

3. Système de mesure d'usure selon la revendication 1 ou 2,
**caractérisé en ce que**
le potentiomètre est un potentiomètre rotatif (23).

4. Système de mesure d'usure selon l'une quelconque des revendications précédentes,
**caractérisé en ce que**
le prolongement (28) est réalisé par une tôle métallique (29) et repose contre une extrémité (30) du bras de levier (25).

5. Système de mesure d'usure selon l'une quelconque des revendications précédentes,
**caractérisé en ce que**
le bras de levier (25) est positionné sur le prolongement (28) moyennant une force de ressort exercée par un ressort (31) du dispositif de mesure (13).

6. Système de mesure d'usure selon l'une quelconque des revendications précédentes,
**caractérisé en ce**
**qu'**une pluralité d'éléments de frottement (12), de préférence deux éléments de frottement, tout particulièrement quatre éléments de frottement, sont disposés sur le dispositif de maintien (11), tous les éléments de frottement étant couplés mécaniquement avec le dispositif de mesure (13).

7. Système de mesure d'usure selon la revendication 6,
**caractérisé en ce que**
le dispositif de mesure (11) positionne les éléments de frottement (12) sur une périphérie de la surface de frottement (15) annulaire dans un plan de section transversale commun, au moins deux arbres (24) étant montés sur le dispositif de maintien.

8. Système de mesure d'usure selon la revendication 7 et la revendication 3,
**caractérisé en ce que**
les arbres (24) sont reliés l'un à l'autre par une transmission (26) du dispositif de mesure (13), un parmi lesdits arbres étant couplé au potentiomètre rotatif (23).

9. Système de mesure d'usure selon la revendication 8,
**caractérisé en ce que**
la transmission (26) est réalisée par des roues dentées (27) dont une roue dentée est disposée sur chaque arbre (24), lesdites roues dentées s'engageant l'une dans l'autre.

10. Système de mesure d'usure selon l'une quelconque des revendications précédentes,
**caractérisé en ce que**
le dispositif de mesure (13) comporte un dispositif de traitement moyennant lequel la longueur d'usure peut être déterminée.

11. Système de mesure d'usure selon la revendication 10 et la revendication 3,
**caractérisé en ce que**
le dispositif de traitement peut être utilisé pour déterminer une tension partielle sur le potentiomètre rotatif (23), une position angulaire du bras de levier (25) pouvant être déterminée à partir de la tension partielle, une longueur de l'élément de frottement (12) pouvant être déterminée à partir de la position angulaire.

12. Générateur d'énergie éolienne comprenant un système de mesure d'usure (10) selon l'une quelconque des revendications précédentes.

13. Procédé destiné à mesurer l'usure d'éléments de frottement, notamment de brosses ou d'autres choses semblables, un dispositif de maintien (11) étant utilisé pour positionner au moins un élément de frottement (12) consommable de manière mobile par rapport à une surface de frottement (15), un dispositif de mesure (13) étant utilisé pour déterminer un état d'usure de l'élément de frottement par rapport à une longueur d'usure de l'élément de frottement, un mouvement de l'élément de frottement par rapport à la surface de frottement provoquant un mouvement d'un potentiomètre du dispositif de mesure, ledit potentiomètre étant couplé mécaniquement avec l'élément de frottement, le dispositif de mesure comportant un arbre (24) ayant un bras de levier (25) et étant monté sur le dispositif de maintien, ledit arbre étant couplé au potentiomètre et le bras de levier étant couplé à l'élément de frottement, ledit bras de levier étant pivoté en mouvant l'élément de frottement dans la direction de la surface de frottement et l'arbre étant tourné
**caractérisé en ce**
**qu'**un prolongement (28) est réalisé ou disposé sur l'élément de frottement, le bras de levier agissant sur ledit prolongement.
